# EUROPÄISCHE PATENTSCHRIFT

(11) **EP 2 369 707 B1**
(45) Veröffentlichungstag und Bekanntmachung des Hinweises auf die Patenterteilung: **21.10.2015**
(21) Anmeldenummer: 11159028.7
(22) Anmeldetag: 21.03.2011
(51) Int. Cl.: H02G 3/18, H02G 3/12

(54) **Geräteeinsatz für Installationsgeräte**
Device insert for installation devices
Appareillage pour appareils d'installation

(30) Priorität: 24.03.2010 DE 102010013433
(43) Veröffentlichungstag der Anmeldung: 28.09.2011
(73) Patentinhaber: OBO Bettermann GmbH & Co. KG, 58710 Menden (DE)
(72) Erfinder: Raschke, Jörg, 51674 Wiehl (DE)
(74) Vertreter: Patentanwälte Ruff, Wilhelm, Beier, Dauster & Partner mbB

(56) Entgegenhaltungen:
- EP-A2- 1 775 815
- DE-A1- 4 019 431
- DE-C2- 4 241 390
- DE-C2- 4 428 811
- DE-C2- 19 922 212

## Beschreibung

Die Erfindung betrifft einen Geräteeinsatz für Installationsgeräte, mit einem Gehäuse und einem Befestigungshaken, wobei der Befestigungshaken in Höhenrichtung des Geräteeinsatzes an dem Gehäuse über einen Verschiebebereich verschiebbar angeordnet ist, und wobei das Gehäuse im Verschiebebereich des Befestigungshakens und/oder der Befestigungshaken eine Anlaufschräge aufweist, die zur Höhenrichtung geneigt ist.

Bekannte Geräteeinsätze für Installationsgeräte werden beispielsweise in Doppelböden, in passenden Ausnehmungen im Estrich von Hohlböden oder in Dosen von estrichüberdeckten Systemen angebracht. Je nachdem, ob ein Geräteeinsatz für Doppelböden, für den Einbau im Estrich oder für den Einbau in Dosen vorgesehen ist, werden unterschiedliche Befestigungsmittel verwendet.

Aus der europäischen Offenlegungsschrift EP 1 775 815 A2 ist ein Geräteeinsatz für Installationsgeräte in Form einer im Querschnitt kreisförmigen Hohtwanddose gemäss dem Oberbegriff des Anspruchs 1 bekannt. Der Geräteeinsatz weist ein Gehäuse und zwei diametral gegenüberliegende Befestigungshaken auf, die in Höhenrichtung des Geräteeinsatzes an dem Gehäuse über einen Verschiebebereich verschiebbar angeordnet sind. Das Gehäuse weist im Verschiebebereich des Befestigungshakens eine Anlaufschräge auf, die in ihrem unteren Bereich zur Höhenrichtung geneigt ist. Der Befestigungshaken ist an einer schwenkbaren Schraube geführt. Eine Drehung der Schraube bewirkt eine Verschiebung des Befestigungshakens entlang dem Verschiebebereich. Befindet sich der Befestigungshaken am unteren Ende der Anlaufschräge, kann das Gehäuse in eine vorher gebohrte Öffnung einer hohlen Wand eingesetzt werden. Wird die Schraube dann nach dem Einsetzen des Gehäuses gedreht, so wird der Befestigungshaken entlang der Anlaufschräge nach oben bewegt und die Schraube schwenkt um einen Drehpunkt an der Oberseite des Gehäuses zusammen mit dem Befestigungshaken nach außen. Auf diese Weise wird der Befestigungshaken abschnittsweise in einen Bereich bewegt, der radial außerhalb der Bohrung in der hohlen Wand liegt. Der Befestigungshaken kann dadurch die hohle Wand hintergreifen, um das Gehäuse festzulegen. Ein prinzipiell gleich aufgebauter Geräteeinsatz ist auch in der deutschen Patentschrift DE 199 22 212 C2 beschrieben.

Die deutsche Patentschrift DE 42 41 390 C2 zeigt eine elektrische Hohlwanddose, bei der ein etwa topfförmiges Gehäuse an zwei gegenüberliegenden Seiten mit Längsführungen für in Höhenrichtung verschiebbare Befestigungshaken versehen ist. Die Befestigungshaken sind jeweils an einer parallel zur Höhenrichtung angeordneten Schraube angeordnet. Durch Drehung der Schraube wird der Befestigungshaken zunächst um 90° nach außen gedreht und steht dann über die Außenwand des Gehäuses vor. In dieser nach außen gedrehten Stellung des Befestigungshakens kann die Schraube dann weiter eingedreht werden, um den Befestigungshaken in der Höhenrichtung zu verschieben. Während dieser Verschiebung in der Höhenrichtung wird der Befestigungshaken durch eine nutförmige Führung in seiner nach außen ausgeklappten Stellung gehalten. Eine prinzipiell gleich aufgebaute Hohlwanddose ist aus der deutschen DE 44 28 811 C2 sowie auch aus der deutschen Offenlegungsschrift DE 40 19 431 A1 bekannt.

Mit der Erfindung soll ein universell einsetzbarer Geräteeinsatz geschaffen werden.

Erfindungsgemäß ist hierzu ein Geräteeinsatz für Installationsgeräte mit den Merkmalen von Anspruch 1 vorgesehen.
Durch Vorsehen eines über einen Verschiebebereich verschiebbar angeordneten Befestigungshakens kann der Geräteeinsatz in Doppelböden befestigt werden, indem der Befestigungshaken eine Unterseite der Bodenplatten des Doppelbodens untergreift und dadurch den Geräteeinsatz gegen die Oberseite des Doppelbodens zieht und dadurch fixiert. Indem eine zur Höhenrichtung geneigte Anlaufschräge vorgesehen ist, wird es ermöglicht, den Befestigungshaken mittels einer Verschiebung in Höhenrichtung gleichzeitig nach außen zu drehen. Dadurch wird die Möglichkeit geschaffen, den Geräteeinsatz in einer Ausnehmung im Estrich eines Hohlbodens oder in einer Dose zu fixieren, indem die Befestigungshaken nach außen gedreht werden und sich im Estrich oder in der Dose verkrallen. Der erfindungsgemäße Geräteeinsatz kann dadurch sowohl in Doppelböden als auch in estrichüberdeckten Systemen befestigt werden. Überraschenderweise gelingt diese universelle Befestigbarkeit in besonders einfacher Weise durch Vorsehen eines in Höhenrichtung verschiebbaren Befestigungshakens und einer Anlaufschräge, mittels der der Befestigungshaken während einer Bewegung in Höhenrichtung nach außen gedreht werden kann.

In Weiterbildung der Erfindung weist der Befestigungshaken wenigstens einen im Wesentlichen parallel zur Höhenrichtung angeordneten Grundkörper und einen im wesentlichen senkrecht vom Grundkörper abragenden Hakenabschnitt auf, wobei der Befestigungshaken mit einer ersten Ausrichtung und einer zweiten Ausrichtung an dem Gehäuse angeordnet werden kann, wobei der Grundkörper in der zweiten Ausrichtung gegenüber der ersten Ausrichtung um 180° gedreht ist.

Auf überraschend einfache Weise wird dadurch die Befestigung des Geräteeinsatzes an dünneren und dickeren Doppelböden möglich. Bei dünneren Doppelböden erstreckt sich der Grundkörper ausgehend von seiner Befestigung am Geräteeinsatz nach oben und der Hakenabschnitt ragt dann in geringerem Abstand von der Oberseite des Geräteeinsatzes nach außen ab. Zur Befestigung an dickeren Doppelböden wird der Befestigungshaken um 180° gedreht, so dass der Grundkörper von seiner Befestigung am Geräteeinsatz aus von der Oberseite des Geräteeinsatzes sich weg erstreckt und der Hakenabschnitt dann in größerem Abstand von der Oberseite des Geräteeinsatzes nach außen abragt. Beispielsweise ist der Befestigungshaken mit einer Gewindebohrung versehen und mittels eines am Geräteeinsatz drehbar gelagerten Schraubbolzens in Höhenrichtung verstellbar. Der Befestigungshaken kann dann in einfacher Weise von dem Schraubbolzen abgeschraubt und um 180° gedreht wieder aufgeschraubt werden, um eine Befestigung an dickeren bzw. dünneren Bodenplatten von Doppelböden zu ermöglichen.

In Weiterbildung der Erfindung ist der Befestigungshaken wenigstens von einer ersten, innerhalb eines Außenumfangs eines Gehäuses liegenden Position in eine zweite, außerhalb des Gehäuseumfangs liegende Position um eine parallel zur Höhenrichtung liegende Schwenkachse verschwenkbar.

Auf diese Weise lässt sich eine zuverlässige Befestigung erreichen, indem der Befestigungshaken um eine parallel zur Höhenrichtung liegende Schwenkachse verschwenkt wird, wenn er parallel zur Höhenrichtung verschoben wird. Der Befestigungshaken kann sich dadurch in eine den Geräteeinsatz umgebende Wand eingraben. Sobald der Befestigungshaken Halt in oder an der umgebenden Wand gefunden hat, verschiebt er sich relativ zur Wand nicht mehr und infolgedessen wird der Geräteeinsatz mit seiner Oberseite gegen die Bodenoberfläche gezogen, um sicheren Halt zu geben, Die zweite Position des Befestigungshakens liegt dabei außerhalb eines Gehäuseumfangs des Geräteeinsatzes, wobei dieser Gehauseumfang durch die Abmessungen des Geräteeinsatzes unterhalb eines oberen Auflagerandes bestimmt ist. Die zweite, außerhalb des Gehäuseumfangs liegende Position des Befestigungshakens kann somit immer noch innerhalb eines größten Umfangs liegen, der durch den Auflagerand des Geräteeinsatzes bestimmt ist.

Die erste Position des Befestigungshakens muss innerhalb des Gehäuseumfangs des Geräteeinsatzes liegen, um den Geräteeinsatz in eine gegebenenfalls eng bemessene Öffnung einer Dose, in einem Estrich oder in einem sonstigen Boden einschieben zu können.

In Weiterbildung der Erfindung ist der Befestigungshaken wenigstens in der zweiten Position parallel zur Höhenrichtung verschiebbar.

Indem der Befestigungshaken auch in der zweiten Position parallel zur Höhenrichtung verschiebbar ist, kann der Geräteeinsatz nach dem Verschwenken des Befestigungshakens in die zweite Position damit nach erfolgtem Eingraben des Befestigungshakens in der umgebenden Wand relativ zum Befestigungshaken und parallel zur Höhenrichtung bewegt werden, beispielsweise um einen Auflagerand des Geräteeinsatzes fest gegen eine Oberseite einer Bodenoberfläche zu ziehen und um den Geräteeinsatz damit sicher am Boden zu fixieren.

Weitere Merkmale und Vorteile der Erfindung ergeben sich aus den Ansprüchen und der nachfolgenden Beschreibung einer bevorzugten Ausführungsform der Erfindung im Zusammenhang mit den Zeichnungen. In den Zeichnungen zeigen:
- Fig. 1: eine perspektivische Ansicht eines erfindungsgemäßen Geräteeinsatzes von schräg oben,

- Fig. 2: eine vergrößerte Darstellung der Einzelheit II aus Fig. 1,
- Fig. 3: eine Darstellung der Einzelheit II aus Fig. 2 aus anderem Blickwinkel,
- Fig. 4: eine isolierte Darstellung eines Befestigungshakens für den Geräteeinsatz der Fig. 1,
- Fig. 5: eine Draufsicht auf den Geräteeinsatz der Fig. 1,
- Fig. 6: eine Seitenansicht des Geräteeinsatzes der Fig. 5, wobei sich ein Befestigungshaken in einer ersten Lage befindet,
- Fig. 7: eine abschnittsweise Ansicht der Schnittebene A-A in Fig. 6,
- Fig. 8: eine Seitenansicht des Geräteeinsatzes der Fig. 5, wobei sich ein Befestigungshaken in einer zweiten Lage befindet,
- Fig. 9: eine abschnittsweise Ansicht der Schnittebene B-B in Fig. 8,
- Fig. 10: eine Seitenansicht des Geräteeinsatzes der Fig. 5, wobei sich ein Befestigungshaken in einer dritten Lage befindet und
- Fig. 11: eine abschnittsweise Ansicht der Schnittebene C-C in Fig. 10.

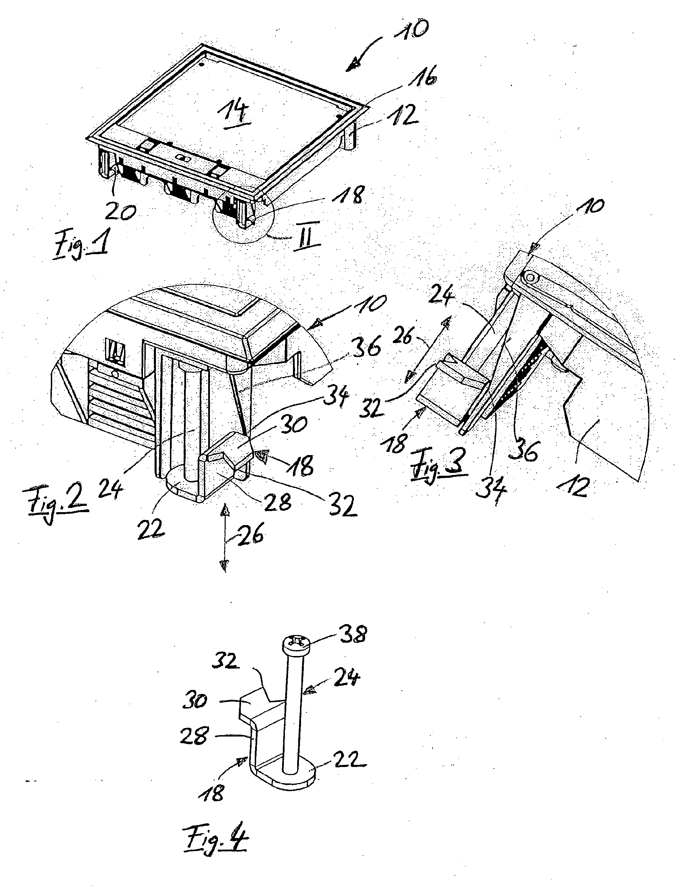

Die Darstellung der Fig. 1 zeigt einen erfindungsgemäßen Geräteeinsatz 10, der mit einem Gehäuse 12 und einem in dem Gehäuse 12 schwenkbar gelagerten Deckel 14 versehen ist. Der Geräteeinsatz 10 ist für den Einbau in Bodenoberflächen von Gebäuden vorgesehen. Der Geräteeinsatz 10 kann in eine Öffnung in einem Doppelboden, in einem Hohlboden oder einer Dose eines estrichüberdeckten Systems eingesetzt werden, wobei die Öffnung dann so bemessen sein muss, dass sie etwas größer als ein Umfang des Gehäuses 12, aber kleiner als ein Außenumfang eines Auflagerandes 16 ist. Der Geräteeinsatz 10 liegt dann mit der Unterseite des Auflagerandes 16 auf der Bodenoberfläche auf und wird mittels insgesamt vier Befestigungshaken 18, 20, von denen lediglich zwei erkennbar sind, im Boden befestigt.

Der Geräteeinsatz 10 kann generell in jede Art Ausnehmung in einem Boden befestigt werden, wobei die Ausnehmung größer sein muss als der Gehäuseumfang, aber kleiner als der Außenumfang des Auflage. randes 16.

Es ist dabei festzustellen, dass die Erfindung prinzipiell auch auf Geräteeinsätze ohne Auflagerand anwendbar ist, wenn also beispielsweise ein Geräteeinsatz mit seiner Oberkante bündig mit einer Bodenoberfläche abschließen soll und keinen Auflagerand aufweist, dessen Unterseite auf einer Bodenoberfläche aufliegt.

In einem Innenraum des Geräteeinsatzes 10 werden üblicherweise sogenannte Gerätebecher angeordnet, in die dann Installationsgeräte eingebaut werden, beispielsweise Steckdosen, Datensteckdosen, Schalter, Überspannungsschutzgeräte oder dergleichen.

Anhand der vergrößerten Darstellung der Einzelheit II in Fig. 2 sind der Aufbau und die Anordnung des Befestigutigshakens 18 zu erkennen.

Der Befestigungshaken 18 besteht aus einem zweimal um 90° abgebogenen Blechstreifen, wobei der Befestigungshaken einen Montageabschnitt 22 aufweist, der mit einer Gewindebohrung versehen und parallel zu einer Grundfläche des Geräteeinsatzes 10 angeordnet ist. Der Montageabschnitt 22 ist auf eine Gewindeschraube 24 aufgeschraubt und durch Drehung der Gewindeschraube 24 parallel zu einer Höhenrichtung des Geräteeinsatzes, die mittels eines Doppelpfeiles 26 angedeutet ist, verschiebbar. Um 90° ausgehend vom Montageabschnitt 22 abgebogen ist ein Schenkel 28, der sich in der in Fig. 2 dargestellten Einbaulage des Befestigungshakens 18 parallel zur Höhenrichtung und Richtung der Oberseite des Geräteeinsatzes 10 erstreckt. An den Schenkel 28 schließt sich ein gegenüber dem Schenkel 28 um 90° abgebogener Hakenabschnitt 30 an. Der Hakenabschnitt 30 ist im Vergleich zum Montageabschnitt 22 gleichsinnig relativ zum Schenkel 28 abgebogen, der Montageabschnitt 22 ist in Fig. 2 also im Uhrzeigersinn ausgehend vom Schenkel 28 abgebogen, der Hakenabschnitt 30 ebenfalls im Uhrzeigersinn, so dass der Befestigungshaken 18 eine näherungsweise Z-artige Form aufweist. Der Hakenabschnitt 30 weist eine unregelmäßige, mehreckige Form auf und ist mit einer Eingreifspitze 32 versehen. Die Eingreifspitze 32 soll in ein den Geräteeinsatz 10 umgebendes Material eingreifen und den Befestigungshaken 18 dadurch relativ zu diesem umgebenden Material fixieren.

Durch Drehen der Gewindeschraube 24 kann, wie erwähnt, der Befestigungshaken 18 nach unten, von der Oberseite des Geräteeinsatzes 10 weg, oder nach oben, in Richtung auf die Oberseite des Geräteeinsatzes 10, bewegt werden. Wird der Befestigungshaken 18, ausgehend von der in Fig. 2 dargestellten Lage, nach oben bewegt, gelangt eine der Eingreifspitze 32 gegenüberliegende Anlaufkante 34 in Anlage an eine Anlaufschräge 36 am Gehäuse des Geräteeinsatzes 10, wobei diese Anlaufschräge 36 gegenüber einer Höhenrichtung des Geräteeinsatzes 10, in Fig. 2 also gegenüber dem Doppelpfeil 26, geneigt ist.

Die Ausbildung der Anlaufschräge 36 ist besser in der Darstellung der Fig. 3 zu erkennen. Die Anlaufschräge 36 ist gegenüber dem Doppelpfeil 26 gegen den Uhrzeigersinn geneigt, um einen Winkel von etwa 20°, so dass sich, gesehen in Richtung auf die Oberseite des Geräteeinsatzes 10, und aus dem Blickwinkel der Fig. 3, ein Abstand zwischen Anlaufschräge 36 und Gewindeschraube 24 verringert. Bei einer Bewegung des Befestigungshakens 18 in Richtung auf die Oberseite des Geräteeinsatzes zu, in der Darstellung der Fig. 3 also von links unten nach rechts oben, kommt die Anlaufkante 34 in Anlage an die Anlaufschräge 36 und die Anlaufschräge 36 wird die Anlaufkante 34 und damit den Befestigungshaken 18 verdrehen, so dass die Eingreifspitze 132 sich nach außen, über den Außenumfang des Geräteeinsatzes 10 hinaus bewegt. Eine solche Drehung des Befestigungshakens 18 erfolgt über eine Drehung der Gewindeschraube 24 und die Wirkung der Anlaufschräge 36. Je nach Steigung der Gewindeschraube 24 liegt damit eine große Übersetzung vor, und es können mittels der Anlaufschräge 36 erhebliche Kräfte aufgebracht werden, die ein Eindringen der Eingreifspitze 32 auch in harte, umgebende Materialien ermöglichen.

Sobald die Eingreifspitze 32 in das umgebende Material eingegriffen hat und in diesem umgebenden Material fixiert ist, führt eine weitere Drehung der Gewindeschraube 24 im gleichen Sinn dazu, dass das Gehäuse 12 des Geräteeinsatzes 10 in Richtung auf den Befestigungshaken 18 gezogen wird, dass sich also ein Abstand zwischen einer Oberseite des Geräteeinsatzes 10 und dem Befestigungshaken 18 verringert. Wenn, wie bei dem dargestellten Geräteeinsatz 10, dieser mit einem Auflagerand 16 versehen ist, kann dadurch der Auflagerand 16 fest gegen eine Bodenoberfläche gezogen werden.

Die Darstellung der Fig. 4 zeigt in isolierter Darstellung die Gewindeschraube 24 und den Befestigungshaken 18. In der dargestellten Montageposition des Befestigungshakens 18 ist der Montageabschnitt 22 weiter von einem Kopf 38 der Gewindeschraube 24 entfernt als der Befestigungsabschnitt 30. In dieser Montagelage kann der Befestigungshaken 18 infolgedessen zum einen dazu verwendet werden, einen Geräteeinsatz dadurch zu befestigen, dass sich die Eingreifspitze 32 in umgebendes Material beispielsweise Estrich, eingräbt. Zum anderen kann in der dargestellten Montagelage ein Geräteeinsatz an dünnen Bodenplatten eines Doppelbodens befestigt werden, indem der Befestigungsabschnitt 30 gegen die Unterseite der Bodenplatten gedrückt und dadurch der Auflagerand 16 des Geräteeinsatzes 10 gegen die Oberseite der Bodenplatten gezogen wird.

Soll der Geräteeinsatz an dickeren Bodenplatten befestigt werden, die so dick sind, dass der Befestigungsabschnitt 30 in der in Fig. 4 dargestellten Lage nicht weit genug vom Kopf der Gewindeschraube 24 weg verschoben werden könnte, um auf einer Unterseite der Bodenplatten anzulegen, wird der Befestigungshaken 18 um 180° gedreht, indem er zunächst von der Gewindeschraube 24 entfernt und dann wieder so auf die Gewindeschraube 24 aufgedreht wird, dass der Montageabschnitt 22 näher am Kopf 38 der Gewindeschraube 24 liegt als der Befestigungabschnitt 30. Der Schenkel 32 erstreckt sich in beiden Fällen parallel zur Gewindeschraube 24. In einer solchen, um 180° verdrehten Montagelage des Befestigungshakens 18 kann der Befestigungsabschnitt 30 dann auch wesentlich dickere, nämlich um etwa um die doppelte Länge des Schenkels 32 dickere, Bodenplatten von Doppelböden hintergreifen.

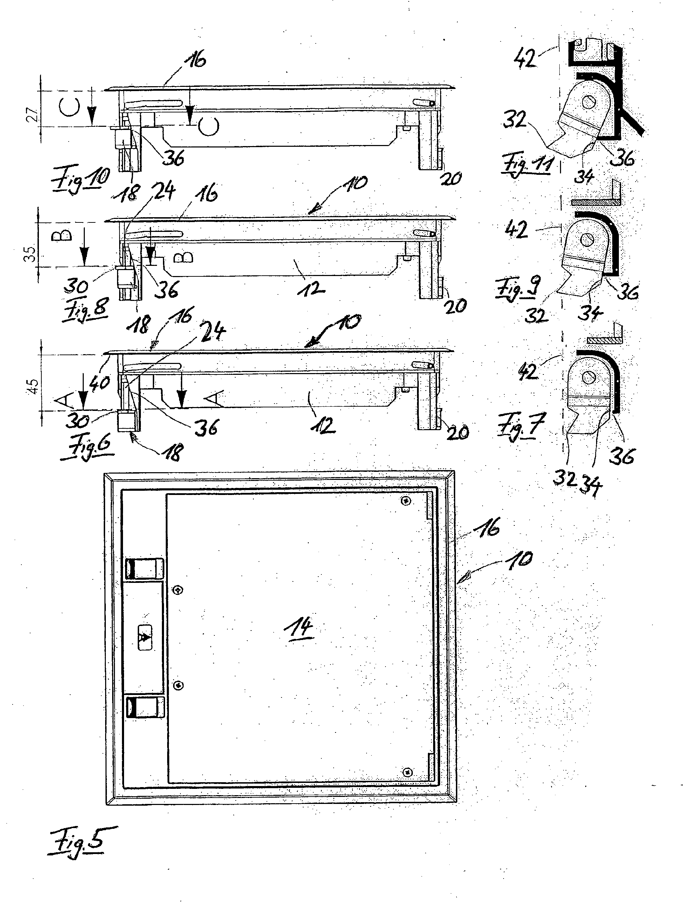

Die Darstellung der Fig. 5 zeigt eine Draufsicht des erfindungsgemäßen Geräteeinsatzes 10 mit dem Deckel 14 und dem Auflagerand 16. In der Draufsicht der Fig. 5 ist lediglich der Auflagerand 16 zu erkennen, dessen Außenumfang größer ist als ein Außenumfang eines, in Fig. 5 nicht erkennbaren, Gehäuses.

Die Seitenansicht der Fig. 6 zeigt den Geräteeinsatz 10, wobei sich der Befestigungshaken 18 in einer ersten Lage befindet, in der eine Oberseite des Befestigungsabschnitts 30 in einem Abstand von 45 mm von einer Unterseite 40 des Auflagerandes 16 beabstandet ist. In dieser ersten Lage liegt der Befestigungshaken 18 noch innerhalb eines Außenumfangs des Gehäuses 12, besser gesagt, innerhalb einer gedachten Verlängerung des Gehäuseumfangs des Gehäuses 12 nach unten, vom Auflagerand 16 weg. In dieser ersten Lage des Befestigungshakens 18 kann der Geräteeinsatz 10 somit problemlos in eine Bodenöffnung eingeschoben werden, die geringfügig größer als der Außenumfang des Gehäuses 12 und kleiner als der Außenumfang des Auflagerandes 16 ist.

In der in Fig. 6 dargestellten ersten Lage des Befestigungshakens 18 ist der Hakenabschnitt 30 noch unterhalb der Anlaufschräge 36 angeordnet.

Dies ist auch gut in der Ansicht auf die Schnittebene A-A zu erkennen, die in Fig. 7 dargestellt ist. Die Anlaufkante 34 befindet sich in geringem Abstand von der Anlaufschräge 36 und die Eingreifspitze 32 liegt noch innerhalb oder auf einer gedachte Verlängerung des Außenumfangs des Gehäuses 12, wobei diese gedachte Verlängerung mittels einer gestricheiten Linie 42 angedeutet ist.

Ausgehend von der in Fig. 6 dargestellten ersten Lage wird der Befestigungshaken 18 dann durch Drehen der Gewindeschraube 24 in die in Fig. 8 gezeigte zweite Lage bewegt. Der Befestigungshaken 18 wird dabei parallel zur Höhenrichtung des Gehäuses 12 und auf die Oberseite des Geräteeinsatzes 10 mit dem Auflagerand 16 zu bewegt. In dieser zweiten Lage ist der Befestigungshaken 18 bereits um einen kleinen Winkel um eine Schwenkachse verschwenkt worden, die durch die Mittelachse der Gewindeschraube 24 definiert ist. Wie zu erkennen ist, befindet sich der Hakenabschnitt 30 dadurch abschnittsweise bereits außerhalb eines Außenumfangs des Gehäuses 12 bzw. einer gedachten Verlängerung des Außenumfangs 12. Durch die Bewegung des Befestigungshakens nach oben ist der Hakenabschnitt 30 durch die Wirkung der Anlaufschräge 36 nach außen gedreht worden.

Die Ansicht auf die Schnittebene B-B in Fig. 9 zeigt, dass die Anlaufkante 34 nun an der Anlaufschräge 36 am Gehäuse anliegt und die Eingreifspitze 32 bereits außerhalb der gedachten Verlängerung des Außenumfangs des Gehäuses liegt, die wieder mittels der gestrichenen Linie 42 angedeutet ist.

Durch Weiterdrehen der Befestigungsschraube 24 gelangt der Befestigungshaken 18 in eine dritte Lage, die in Fig. 10 dargestellt ist. Durch die Verschiebung des Befestigungshakens 18 nach oben, in Richtung auf den Auflagerand 16 zu, hat die Anlaufschräge 36 bewirkt, dass sich der Befestigungshaken 18 weiter um die Mittelachse der Gewindeschraube 24 nach außen gedreht hat.

In der Ansicht auf die Schnittebene C-C, die in Fig. 11 dargestellt ist, ist zu erkennen, dass sich die Eingreifspitze 32 nun deutlich außerhalb der gedachten Verlängerung des Außenumfangs des Gehäuses, angedeutet durch die gestrichelte Linie 42, befindet und dass die Anlaufkante 34 immer noch an der Anlaufschräge 36 des Gehäuses 12 anliegt. Je nach Abstand des das Gehäuse 12 umgebenden Materials kann sich die Eingreifspitze 32 nun in das umgebende Material eingraben und den Befestigungshaken 18 dadurch fixieren.

Zwischen den in den Fig. 6 bis 11 dargestellten Lagen des Befestigungshakens 18 findet selbstverständlich ein fließender Übergang statt, da die Anlaufschräge 36 bei einer Bewegung des Befestigungshakens 18 nach oben ein kontinuierliches Ausschwenken der Eingreifspitze 32 verursacht, wobei der Grad des Ausschwenkens durch die Steigung der Anlaufschräge 36, also deren Neigung zur Gewindeschraube 24 bedingt ist.

Der Darstellung der Fig. 6 ist auch ohne Weiteres zu entnehmen, dass der Geräteeinsatz 10 an einem Hohlraumboden befestigt werden könnte. Wenn der Hohlraumboden beispielsweise eine Dicke von etwa 40 mm aufweisen würde, gemessen von einer Bodenoberfläche zu einer Unterseite des Bodens, könnte der Befestigungshaken 18 in der in Fig. 6 dargestellten Position sich durch eine Drehung der Gewindeschraube 24 nach außen verdrehen, so dass der Befestigungsabschnitt 30 sich über den Außenumfang des Gehäuses 12 hinaus bewegt und sich dann etwa so weit nach außen erstreckt, wie der Auflagerand 16. Durch Weiterdrehen der Gewindeschraube 24 kann sich der Befestigungshaken 18 dann nach oben bewegen, bis der Befestigungsabschnitt 30 an einer Unterseite der Bodenplatten anliegt, Ein Weiterdrehen der Gewindeschraube 24 führt dann dazu, dass der Auflagerand 16 gegen die Oberseite der Bodenplatten gezogen wird und der Geräteeinsatz 10 dadurch fixiert wird. Je nachdem, ob der Geräteeinsatz 10 in einen Doppelboden oder einen Hohlboden bzw. eine Dose eingesetzt ist, wird der Befestigungshaken 18 durch einfaches Drehen der Gewindeschraube 24 erst nach außen gedreht und dann nach oben gezogen oder bis zur Anlaufschräge 36 nach oben gezogen und dann nach außen verschwenkt. In beiden Fällen genügt einfaches Drehen der Gewindeschraube 24, um den Geräteeinsatz 10 in unterschiedlichen Böden sicher zu befestigen.

Die dargestellte Ausführungsform stellt einen quadratischen Geräteeinsatz dar, bei dem insgesamt vier Befestigungshaken 18, 20 an jeweils einer Ecke des Geräteeinsatzes 10 angeordnet sind und in der anhand des Befestigungshakens 18 beschriebenen Art und Weise der Eingriff mit dem umgebenden Bodenmaterial gebracht werden müssen.

## Patentansprüche

1. Geräteeinsatz für Installationsgeräte mit einem Gehäuse (12) und wenigstens einem Befestigungshaken (18, 20), der in Höhenrichtung des Geräteeinsatzes (10) an dem Gehäuse (12) über einen Verschiebebereich verschiebbar angeordnet ist, wobei das Gehäuse (12) im Verschiebebereich des Befestigungshakens (18, 20) und/oder der Befestigungshaken eine Anlaufschräge (36) aufweist, die zur Höhenrichtung geneigt ist, **dadurch gekennzeichnet, dass** die Anlaufschräge bei einer Bewegung des Befestigungshakens entlang dem Verschiebebereich eine kontinuierliche Drehung des Befestigungshakens bewirkt.

2. Geräteeinsatz nach Anspruch 1, **dadurch gekennzeichnet, dass** der Befestigungshaken (18, 20) wenigstens einen im wesentlichen parallel zur Höhenrichtung angeordneten Grundkörper und einen im wesentlichen senkrecht vom Grundkörper abragenden Hakenabschnitt (30) aufweist, wobei der Befestigungshaken (18, 20) mit einer ersten Ausrichtung und einer zweiten Ausrichtung an dem Gehäuse (12) angeordnet werden kann, wobei der Grundkörper in der zweiten Ausrichtung gegenüber der ersten Ausrichtung um 180 Grad gedreht ist.

3. Geräteeinsatz nach einem der vorstehenden Ansprüche, **dadurch gekennzeichnet, dass** der Befestigungshaken (18, 20) wenigstens von einer ersten Position in eine zweite Position um eine parallel zur Höhenrichtung liegende Schwenkachse verschwenkbar ist.

4. Geräteeinsatz nach Anspruch 3, **dadurch gekennzeichnet, dass** der Befestigungshaken (18, 20) wenigstens in der zweiten Position parallel zur Höhenrichtung verschiebbar ist.

## Claims

1. Device insert for installation devices, comprising a housing (12) and at least one fastening hook (18, 20), said hook mounted on the housing (12) to be displaceable in the elevation direction of the device insert (10) over a displacement range, wherein the housing (12) in the displacement range of the fastening hook (18, 20) and/or the fastening hook include(s) an entry slant (36) which is inclined relative to the elevation direction, **characterized in that** the entry slant causes continuous rotation of the fastening hook during movement of the fastening hook along the displacement range.

2. Device insert according to claim 1, **characterized in that** the fastening hook (18, 20) includes at least one base body disposed essentially parallel to the elevation direction and a hook portion (30) projecting from the base body essentially perpendicularly, wherein the fastening hook (18, 20) can be disposed on the housing (12) with a first orientation and a second orientation, wherein the base body in the second orientation is turned by 180 degrees in relation to the first orientation.

3. Device insert according to any of the preceding claims, **characterized in that** the fastening hook (18, 20) is pivotable at least from a first position to a second position about a pivot axis oriented parallel to the elevation direction.

4. Device insert according to claim 3, **characterized in that** the fastening hook (18, 20) is displaceable at least in the second position parallel to the elevation direction.

## Revendications

1. Appareillage pour appareils d'installation comprenant un boîtier (12) et au moins un crochet de fixation (18, 20) qui est disposé dans la direction de la hauteur de l'appareillage (10) sur le boîtier (12) de manière déplaçable sur une plage de déplacement, le boîtier (12), dans la plage de déplacement du crochet de fixation (18, 20) et/ou le crochet de fixation présentant un biseau de montée (36) qui est incliné par rapport à la direction en hauteur, **caractérisé en ce que** le biseau de montée, dans le cas d'un déplacement du crochet de fixation le long de la plage de déplacement, provoque une rotation continue du crochet de fixation.

2. Appareillage selon la revendication 1, **caractérisé en ce que** le crochet de fixation (18, 20) présente au moins un corps de base disposé essentiellement parallèlement à la direction en hauteur et une portion de crochet (30) faisant saillie essentiellement perpendiculairement depuis le corps de base, le crochet de fixation (18, 20) pouvant être disposé avec une première orientation et une deuxième orientation sur le boîtier (12), le corps de base, dans la deuxième orientation, étant tourné de 180° par rapport à la première orientation.

3. Appareillage selon l'une quelconque des revendications précédentes, **caractérisé en ce que** le crochet de fixation (18, 20) peut pivoter au moins d'une première position dans une deuxième position autour d'un axe de pivotement situé parallèlement à la direction en hauteur.

4. Appareillage selon la revendication 3, **caractérisé en ce que** le crochet de fixation (18, 20) peut être déplacé au moins dans la deuxième position parallèlement à la direction en hauteur.
